# EUROPEAN PATENT SPECIFICATION

(11) **EP 4 328 871 B1**
(45) Date of publication and mention of the grant of the patent: **01.04.2026**
(21) Application number: 23193178.3
(22) Date of filing: 24.08.2023
(51) Int. Cl.: G06V 20/59, G06V 40/10, G06V 40/16, G06V 40/18

(54) **SYSTEM AND METHOD FOR NON-INVASIVE OPERATOR HEALTH MONITORING**
SYSTEM UND VERFAHREN ZUR NICHTINVASIVEN BEDIENERGESUNDHEITSÜBERWACHUNG
SYSTÈME ET PROCÉDÉ DE SURVEILLANCE NON INVASIVE DE LA SANTÉ D'UN OPÉRATEUR

(30) Priority: 24.08.2022 IN 202211048227; 29.11.2022 US 202218070910
(43) Date of publication of application: 28.02.2024
(73) Proprietor: Rockwell Collins, Inc., Cedar Rapids, IA 52498 (US)
(72) Inventor: KUNHIRAMAN, Prajitha, Bengaluru (IN); TIANA, Carlo L., Goldendale, WA (US); CHATTERJEE, Amrit, Hyderabad (IN)
(74) Representative: Dehns

(56) References cited:
- CN-A- 114 742 090
- US-A1- 2018 186 234
- US-A1- 2021 188 291
- US-A1- 2022 230 522
- HU XINYUN ET AL: "Detecting fatigue in car drivers and aircraft pilots by using non-invasive measures: The value of differentiation of sleepiness and mental fatigue", JOURNAL OF SAFETY RESEARCH, PERGAMON, AMSTERDAM, NL, vol. 72, 14 January 2020 (2020-01-14), pages 173 - 187, XP086096986, ISSN: 0022-4375, [retrieved on 20200114], DOI: 10.1016/J.JSR.2019.12.015

## Description

### BACKGROUND

Human error is one of the direct factors that impacts aviation safety. The operator's health is one factor that contributes to human error. There is a need to find ways to minimize these human errors.

Additionally, as some operators shift to a single pilot system, there is a need to find ways to monitor the single pilot's health via non-human or substantially automated systems.

### Documents:

US 2022/230522 A1 (MYERS RAMA [AU]), 21 July 2022;
US 2021/188291 A1 (EL KALIOUBY RANA [US] ET AL), 24 June 2021;
CN 114 742 090 A (UNIV NORTHWESTERN POLYTECHNICAL), 12 July 2022 and
US 2018/186234 A1 (MESTHA LALIT KESHAV [US] ET AL), 5 July 2018
represent the prior art of the background of the invention.

### SUMMARY

In one aspect, there is provided a system as defined by claim 1.

In some embodiments, the one or more pilot monitoring devices may include one or more cameras.

In some embodiments, the one or more cameras may include one or more cockpit cameras.

In some embodiments, the one or more cameras may include one or more head worn device cameras.

In some embodiments, the one or more processors may be configured to determine the pilot health monitoring value based on at least one of the determined one or more eye tracking parameters, the determined one or more mouth tracking parameters, the one or more head tracking parameters, or the determined emotion of the pilot using one of a rule-based algorithm or a machine learning model stored in the memory of the one or more controllers.

In some embodiments the one or more processors may be configured to determine the pilot health monitoring value based on at least one of the determined one or more eye tracking parameters, the determined one or more mouth tracking parameters, or the one or more head tracking parameters using one or more predetermined thresholds stored in the memory of the one or more controllers.

In some embodiments, the one or more eye tracking parameters may include at least one of a blink frequency, a percentage of eye lid closure, an average eye closure, a blink type, an average eye closure speed, an interblink duration, an eye gaze state, or an eye gaze frequency.

In some embodiments, the one or more mouth tracking parameters may include a yawn frequency.

In some embodiments, the one or more head tracking parameters may include a head tilt angle.

In some embodiments, the pilot health monitoring value may include a sleep scale score.

In some embodiments, the pilot health monitoring value may include a fatigue scale score.

In some embodiments, the determination of at least one a pulse rate, a blood pressure, a respiration rate based on the determined skin color intensity value may further comprises deriving a power spectrum of one or more pixel values computed from at least one of the pilot's forehead or the pilot's cheeks.

A method is disclosed, in accordance with one or more embodiments of the present disclosure. The method includes receiving at least one of one or more images or one or more videos of one or more tracked facial features of a pilot from one or more pilot monitoring devices, the one or more tracked facial features including one of a pilot's forehead, or a pilot's cheek and optionally, at least one of a pilot's eyes, a pilot's mouth, and a pilot's head posture. The method includes determining at least one of one or more eye tracking parameters, one or more mouth tracking parameters, one or more head tracking parameters, or an emotion of the pilot based on the received one or more mages or one or more videos. The method includes determining a pilot health monitoring value based on at least one of the determined one or more eye tracking parameters, the determined one or more mouth tracking parameters, the one or more head tracking parameters, or the determined emotion of the pilot. The method includes determining a color skin intensity value od at least one of the pilot's forehead or the pilot's cheek. The method includes determining at least one of a pulse rate, a blood pressure, or a respiration rate based on the determined skin intensity value and deriving a pilot's stress score therefrom.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a simplified block diagram of a system for non-invasive operator health monitoring, in accordance with one or more embodiments of the disclosure.
FIG. 1B illustrates a simplified schematic of an aircraft cockpit including a system for non-invasive operator health monitoring, in accordance with one or more embodiments of the disclosure.
FIG. 1C illustrates a simplified schematic of a head worn device including a system for non-invasive operator health monitoring, in accordance with one or more embodiments of the disclosure;
FIG. 2 illustrates a simplified block diagram of a method or processing for non-invasive operator health monitoring, in accordance with one or more embodiments of the disclosure.
FIG. 3A illustrates a simplified schematic of face tracking images of the system for non-invasive operator health monitoring, in accordance with one or more embodiments of the disclosure.
FIG. 3B illustrates a simplified schematic of face tracking images of the system for non-invasive operator health monitoring, in accordance with one or more embodiments of the disclosure.
FIG. 4 illustrates a simplified block diagram of a method or processing for non-invasive operator health monitoring, in accordance with one or more embodiments of the disclosure;
FIGS. 5A-5C illustrate simplified schematics of face tracking images of the system for non-invasive operator health monitoring, in accordance with one or more embodiments of the disclosure;
FIG. 6 illustrates a simplified block diagram of a method or processing for non-invasive operator health monitoring, in accordance with one or more embodiments of the disclosure;
FIG. 7 illustrates a simplified schematic of face tracking images of the system for non-invasive operator health monitoring, in accordance with one or more embodiments of the disclosure;
FIG. 8 illustrates a plot, in accordance with one or more embodiments of the disclosure; and
FIG. 9 illustrates a flowchart depicting a method or process for non-invasive operator health monitoring, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

Human error is one of the direct factors that impacts aviation safety. The operator's health is one factor that contributes to human error. There is a need to find ways to minimize these humans errors. Additionally, current cockpit operations today involve crew resource management procedures where various crewmembers (or other personnel) cross check each other for critical. As some operators shift to a single pilot system, there is a need to find ways to monitor the single pilot's health via non-human or substantially automated systems.

Existing systems are invasive and require a pilot to wear an additional wearable device (or other sensors) to monitor the physiological signals of the pilot (e.g., blood pressure, heart rate, etc.). The invasive nature of the existing systems may cause discomfort for the pilot. Further, the use of multiple sensors to calculate various parameters is costly.

As such, it would be desirable to provide a system and method for non-invasive pilot health monitoring that cures one or more of the shortfalls of the previous approaches discussed above. The system should be non-invasive (e.g., not require the pilot to wear additional devices/sensors). The system should rely on vision-based techniques to calculate a sleep value, fatigue value, and/or a stress value. The system should provide an accurate assessment of a pilot's health status pre-flight, post-flight, and/or during flight.

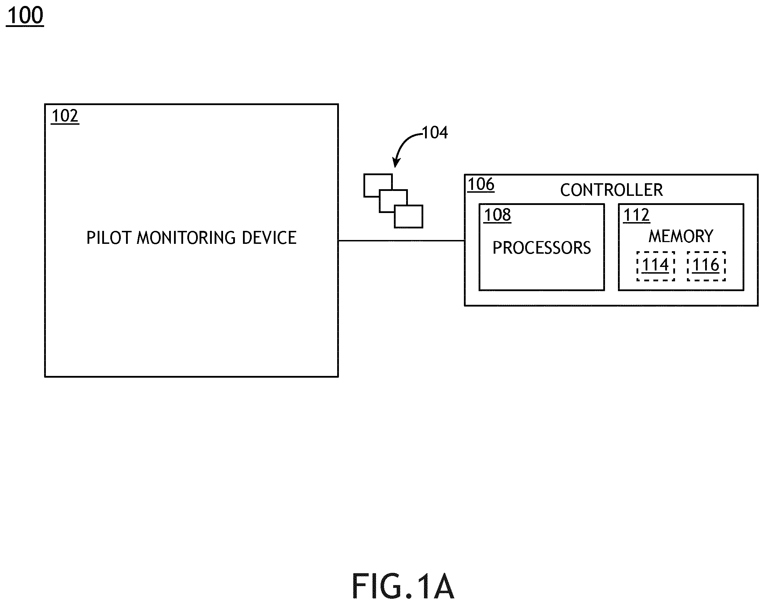

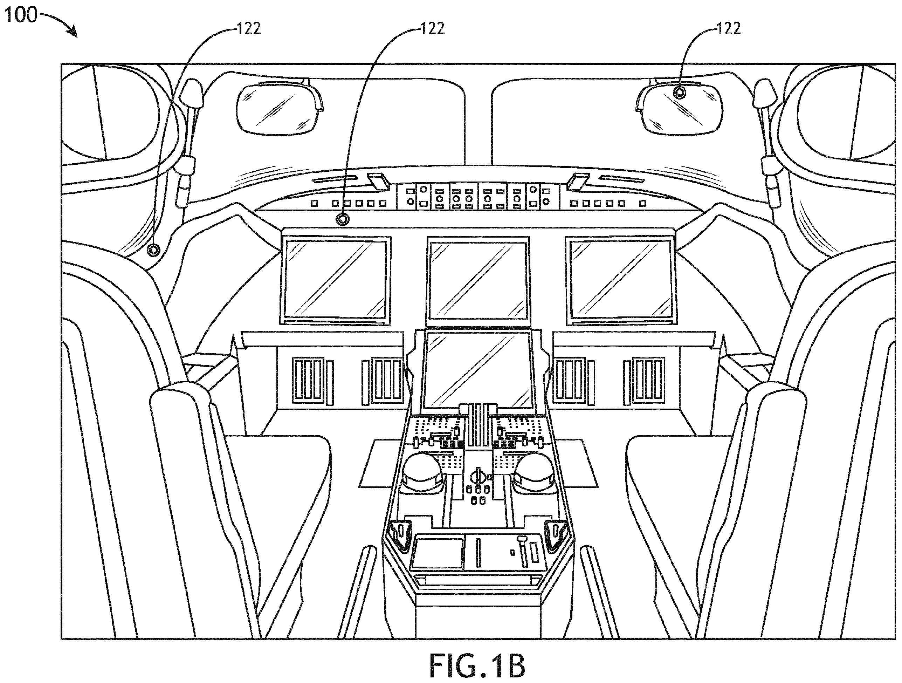

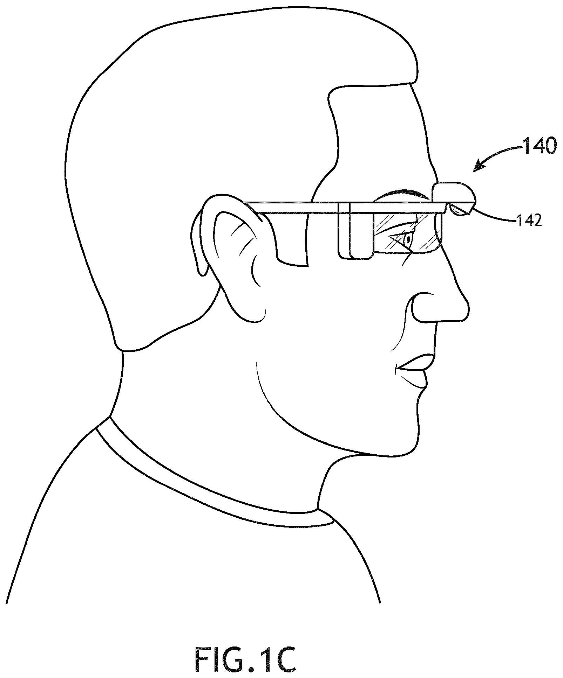

FIG. 1A illustrates a simplified block diagram of the system 100 for non-invasive operator health monitoring, in accordance with one or more embodiments of the present disclosure. FIG. 1B illustrates a simplified schematic of an aircraft cockpit including a system for non-invasive operator health monitoring, in accordance with one or more embodiments of the disclosure. FIG. 1C illustrates a simplified schematic of a head worn device including a system for non-invasive operator health monitoring, in accordance with one or more embodiments of the disclosure.

The system 100 may include one or more pilot monitoring devices 102 configured to track one or more facial features of a vehicle operator (e.g., pilot). For example, the one or more pilot monitoring devices 102 may be configured to track one or more facial features including, but not limited to, at least one of a pilot's eyes, a pilot's mouth, a pilot's head posture, a pilot's forehead, a pilot's cheek, or the like.

The one or more pilot monitoring devices 102 may configured to generate at least one of one or more images 104 or one or more videos 104 including the tracked one or more facial features of the pilot. For example, as shown in FIG. 1B, the one or more pilot monitoring devices 102 may include one or more cameras 122 coupled to one or more portions of a cockpit (such as the cockpit 120 shown in FIG. 1B). In one instance, the one or more cameras 122 may include at least one camera 122 mounted straight facing (e.g., in front of) the pilot. In another instance, the one or more cameras 122 may include at least one camera 122 mounted to the left and/or right of the pilot. In another instance, the one or more cameras 122 may include at least one camera 122 mounted above the pilot (e.g., facing downward). It is noted that the camera 122 may be mounted in any suitable location within the cockpit to accurately capture one or more images and/or videos 104 of the tracked facial features of the pilot.

By way of another example, as shown in FIG. 1C, the one or more pilot monitoring devices 102 may include one or more cameras 142 coupled to one or more portions of a head worn device (HWD) (such as the HWD 140 shown in FIG. 1C). For instance, as shown in FIG. 1C, the one or more cameras 142 may be positioned in the middle of the HWD 140 at a flexible angle and position inside the HWD such that the one or more cameras 142 may capture one or more images or videos of the pilot's face (e.g., from a top angle). It is noted that the cockpit and HWD shown in FIGS. 1B-1C are provided merely for illustrative purposes and shall not be construed as limiting the scope of the present disclosure.

The system may include one or more controllers 106 may be communicatively coupled to the one or more pilot monitoring devices 102. In this regard, the one or more processors 108 of the one or more controllers 106 may be configured to generate one or more control signals to cause the one or more processors 108 to carry out various steps of the present disclosure.

It is noted that the one or more controllers 106 may be housed in a common housing of the pilot monitoring device 102 or housed external to the pilot monitoring device 102. As such, FIGS. 1A-1C are provided merely for illustrative purposes and shall not be construed as limiting the scope of the present disclosure.

In some embodiments, the system 100 may include a rule based algorithm 114, such that the one or more processors are configured to determine a pilot health monitoring value using the rule based algorithm 114. For example, the one or more controllers 106 may include rule based algorithm 114 stored in memory 110.

In some embodiments, the system 100 may include a machine learning algorithm 114, such that the one or more processors are configured to determine a pilot health monitoring value using the machine learning algorithm 114. For example, the one or more controllers 106 may include a machine learning algorithm 114 stored in memory 110.

The rule based/machine learning algorithm 114 may be configured to determine a pilot monitoring value based on one or more biometric parameters derived from the received one or more images or one or more videos, as discussed further herein.

In some embodiments, the system 100 may include a database 116 including one or more predetermined thresholds, such that the one or more processors may be configured to determine a pilot health monitoring value based on the one or more predetermine thresholds. For example, the one or more controllers 106 may include a database 116 stored in memory 110. The one or more predetermined thresholds may be compared to one or more biometric parameters derived from the received one or more images or one or more videos to determine a pilot monitoring value, as discussed further herein. For example, the one or more predetermined thresholds may include one or more predetermined thresholds specific to an individual pilot. By way of another example, the one or more predetermined thresholds may include one or more predetermined thresholds specific a pilot class (e.g., aging pilots, different pilot genders, different pilot physical characteristics). By way of another example, the one or more predetermined thresholds may include one or more predetermined thresholds optimized or calibrated for a plurality of flight phases.

The system 100 may further include a user interface communicatively coupled to the one or more controllers 106. The user interface may include a user input device and a display. The user input device may be configured to receive one or more input commands from a user, the one or more input commands may be configured to input data into the system.

It is noted herein that the one or more components of system 100 may be communicatively coupled to the various other components of system 100 in any manner known in the art. For example, the one or more processors 108 may be communicatively coupled to each other and other components via a wireline (e.g., copper wire, fiber optic cable, and the like) or wireless connection (e.g., RF coupling, IR coupling, WiMax, Bluetooth, 3G, 4G, 4G LTE, 5G, and the like). By way of another example, the controller 106 may be communicatively coupled to one or more components of detection sub-system 102 via any wireline or wireless connection known in the art.

The one or more processors 108 may include any one or more processing elements known in the art. In this sense, the one or more processors 108 may include any microprocessor device configured to execute algorithms and/or program instructions. In general, the term "processor" may be broadly defined to encompass any device having one or more processing elements, which execute a set of program instructions from a non-transitory memory medium (e.g., the memory 110), where the one or more sets of program instructions are configured to cause the one or more processors 108 to carry out any of one or more process steps.

The memory 110 may include any storage medium known in the art suitable for storing the one or more sets of program instructions executable by the associated one or more processors 108. For example, the memory 110 may include a non-transitory memory medium. For instance, the memory 110 may include, but is not limited to, a read-only memory (ROM), a random access memory (RAM), a magnetic or optical memory device (e.g., disk), a magnetic tape, a solid state drive, and the like. The memory 110 may be configured to provide display information to the user device 102. In addition, the memory 110 may be configured to store user input information from one or more user input devices. The memory 110 may be housed in a common controller housing with the one or more processors 108. The memory 110 may, alternatively or in addition, be located remotely with respect to the spatial location of the processors 108 and/or the one or more controllers 106. For instance, the one or more processors 108, the one or more controllers 106 may access a remote database, accessible through a network (e.g., internet, intranet, and the like) via one or more communication interfaces.

The one or more communication interfaces may be operatively configured to communicate with one or more components of the one or more controllers 106 and/or the one or more components of the system . For example, the one or more communication interfaces may also be coupled (e.g., physically, electrically, and/or communicatively) with the one or more processors 108 to facilitate data transfer between components of the one or more components of the one or more controllers 106 and/or the one or more components of the system 100 and the one or more processors 108. For instance, the one or more communication interfaces may be configured to retrieve data from the one or more processors 108, or other devices, transmit data for storage in the memory 110, retrieve data from storage in the memory 110, or the like.

In one embodiment, a user interface 110 is communicatively coupled to the controller 106. In one embodiment, the user interface 110 may include, but is not limited to, one or more desktops, tablets, smartphones, smart watches, or the like. In another embodiment, the user interface 110 includes a display 114 used to display data of the system 100 to a user. The display 114 of the user interface 110 may include any display known in the art. For example, the display 114 may include, but is not limited to, a liquid crystal display (LCD), an organic light-emitting diode (OLED) based display, or a CRT display. Those skilled in the art should recognize that any display device capable of integration with a user interface 110 is suitable for implementation in the present disclosure. In another embodiment, a user may input selections and/or instructions responsive to data displayed to the user via a user input device of the user interface 110.

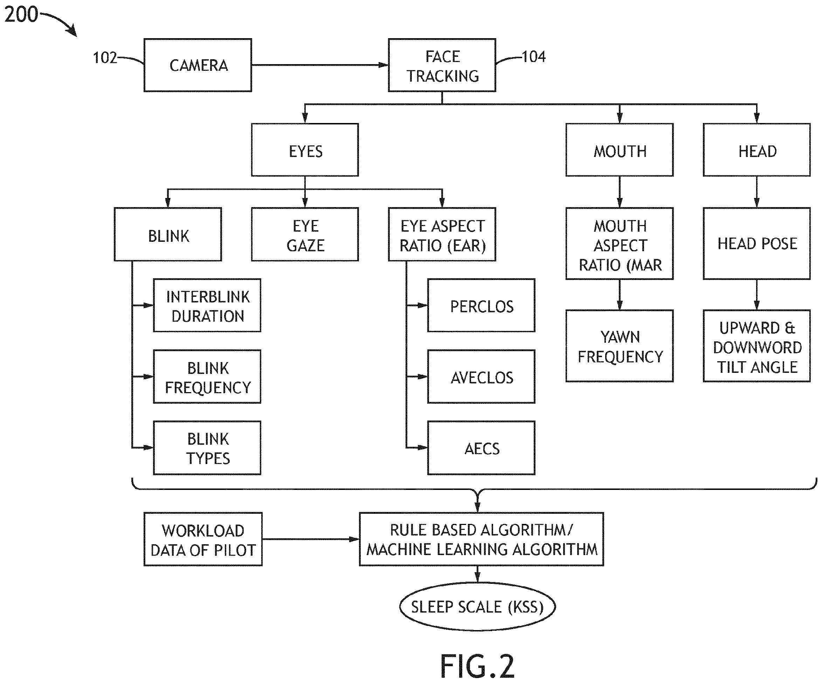

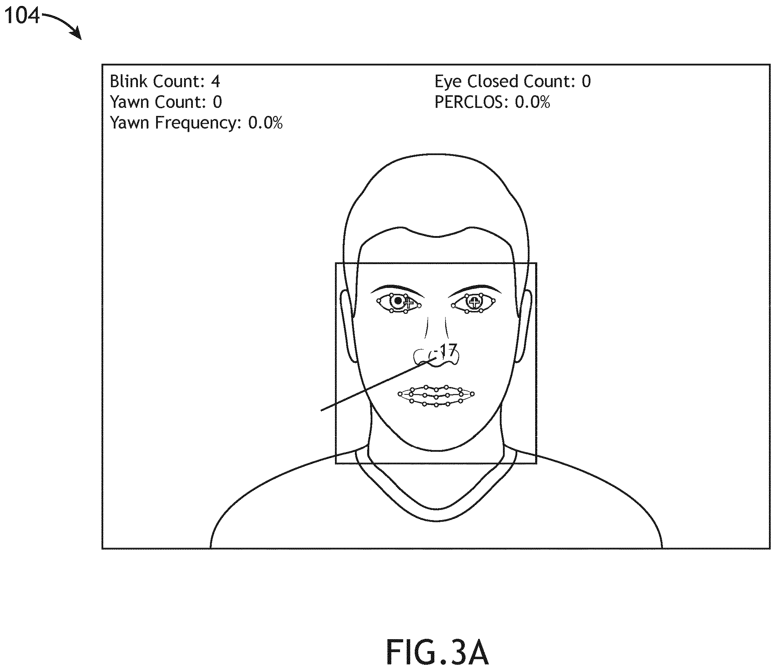

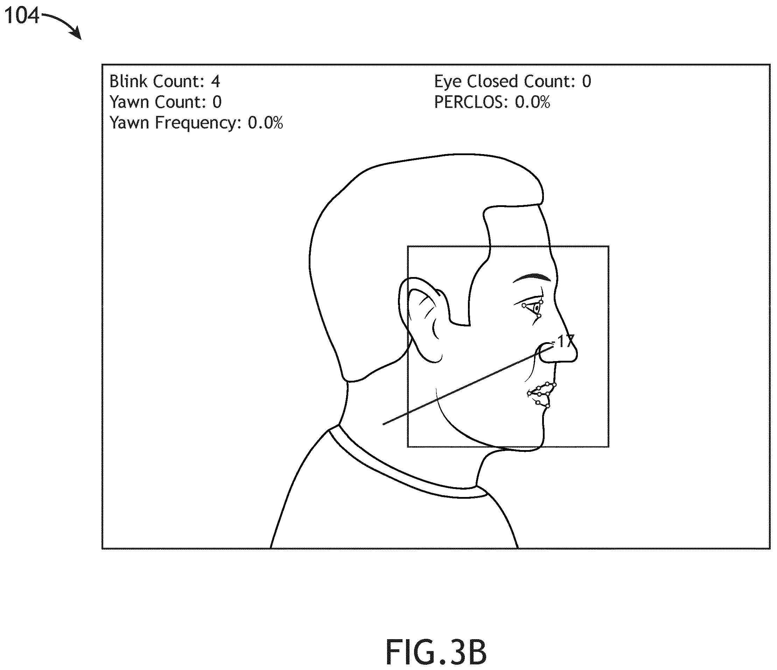

FIG. 2 illustrates a simplified block diagram flow chart depicting a method or process 200 for determine a sleep scale value, in accordance with one or more embodiments of the present disclosure. FIGS. 3A-3B illustrate conceptual views of face tracking images, in accordance with one or more embodiments of the present disclosure.

The system 100 may be configured to determine one or more biometric parameters based on the received images/videos 104 including the tracked facial features.

For example, the one or more controllers 106 may be configured to determine one or more eye parameters. For instance, the one or more or eye parameters may include, but are not limited to, blink parameters (e.g., interblink duration, blink frequency, blink type, and the like), eye gaze parameters, eye aspect ratios (EAR) parameters (e.g., PERCLOS, AVECLOS, AECS, and the like), and the like.

Each of the eye parameters may be measured and averaged out for a given predetermined amount of time (e.g., a minute) and then used to determine the sleep scale value (e.g., using the rule based algorithm or the predetermined thresholds).

Each of the eye parameters may be determined by classifying the eye state as one of open or closed. For example, the one or more controllers 106 may be configured to measure the Eye Aspect Ratio (EAR). For purposes of the present disclosure, EAR may be the ratio of height to width of the eyes, where a value of 0 indicates closed state of eye and anything greater than 0 indicates the open state of eye. Based on this ratio's value and using a common threshold, the eye states are computed.

This EAR ratio's drop for one frame is computed as blink and longer than few frames is computed as eye closed state. With the blinks, their amplitude and time taken is used to differentiate them as short blink, long blink, very long blink, and Sleepy blink. Also, the time difference between blinks is computed as the interblink duration. The same EAR ratio is used to compute the PERCLOS, AVECLOS and AECS. The Eye gaze is computed by looking for the location of Iris center in the tracked frame. Iris tracking may be performed using one or more computer vision techniques. Further iris tracking may additionally and/or alternatively be performed using machine learning model tracking. From the Iris center detected, the eye gaze states are classified as Sleepy gaze, fixed gaze, and alert gaze.

By way of another example, the one or more controllers 106 may be configured to determine one or more mouth parameters. For instance, the one or more or mouth parameters 210 may include, but are not limited to, mouth aspect ratios (MAR) parameters, yawn frequency parameters, and the like.

It is noted that the mouth tracking helps in computing the yawns and their frequency. For example, the one or more controllers 106 may be configured to determine the MAR. For instance, the determined MAR and a predetermined threshold may be used to differentiate between yawn and the other state of mouth.

By way of another example, the one or more controllers 106 may be configured to determine one or more head tracking parameters. For instance, the one or more head tracking parameters may include, but are not limited to, head pose parameters, head tilt angle parameters, and the like.

The one or more controllers 106 may be configured to determine the head tilt angle parameters using the perspective-n-points method to project the points on to the 3D space using the 2D image points extracted using the computer vision techniques and the rotational and translational vectors are derived from it. These are then projected onto the 3D space from one point in the face, which is chosen here as the nose tip and the angle across the x and y axis is computed to determine the head tilting down or upright position is detected.

The system 100 may be configured to determine a sleep scale value based on the one or more determined biometric parameters. For example, the one or more controllers 106 may be configured to determine the sleep scale value based on the determined biometric parameters using a rule based/machine learning algorithm (such as the algorithm 114 stored in memory 110). By way of another example, the one or more controllers 106 may be configured to determine the sleep scale value based on the determined biometric parameters and one or more predetermined thresholds of a database (such as the database 116 stored in memory 110).

Each of these computed biometrics add on to the Sleep algorithm and then the maximum sleep scale is derived out of it. The sleep scale value may be determined according to the Karolinska Sleepiness Scale (KSS). For example, a percentage of eyelid closure (PERCLOS) may be determined. For instance, a percentage of time for which the eyes are closed for 80% or more may be determined. In this regard, a PERCLOS value greater than 30 % (0.3) is considered as the sleepy stage and any value less than 15% (0.15) is considered as the alert stage. By way of another example, an average eye closure (AVECLOS) may be determined. For instance, the average time the eyes are fully closed over a predetermined amount of time (e.g., one minute) may be determined. By way of another example, average eye closure (AECS) may be determined. For instance, the speed of the eye closure may be determined for a predetermined amount of time. In this regard, a higher speed indicates alertness, while a lesser speed indicates signs of sleepiness. Based on the blink classification, the higher the sleep value, the longer the blinks are, and the slower the blinks are the lower the sleep value (e.g., classified as the alert stage). While based on the eye gaze state, a fixed gaze indicates that a person is entering the drowsy state, while a more the alert gaze indicates the Alert state and a more sleepy state indicates the Sleepy state. Interblink duration is related along with the blink count to the sleep scale, such that a higher blink count (with in the average range) and a lesser the blink duration indicates alertness. The head tilt angle computed also adds into the sleep scale, where a higher head tilt value directly corresponds to a high chance of sleepiness. Similarly, the yawn and blink frequency are also used for the Sleep scale, where a higher yawn frequency indicates a higher chance of sleepiness and a lower frequency indicates more alertness.

In some embodiments, the system 100 may be configured to received workload data of a pilot. For example, the one or more controllers 106 may be configured to receive the workload data of the pilot and use the data when computing the sleep scale value.

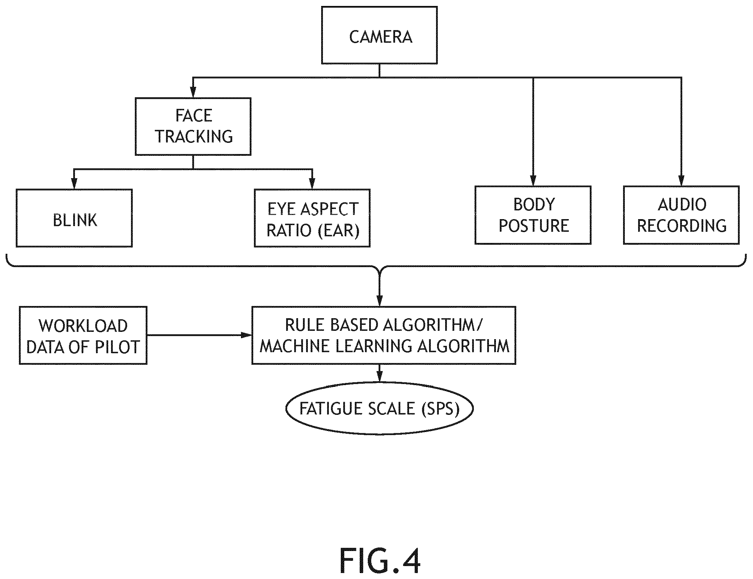

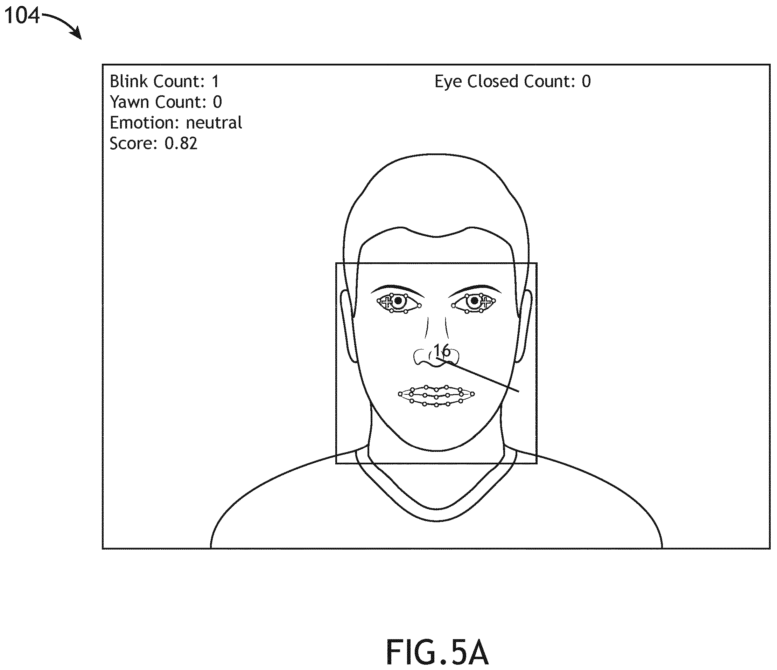

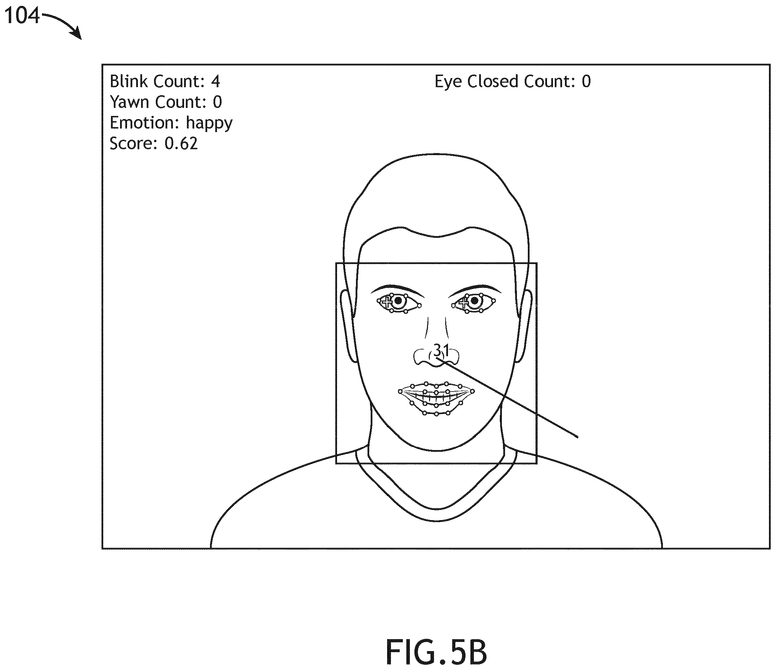

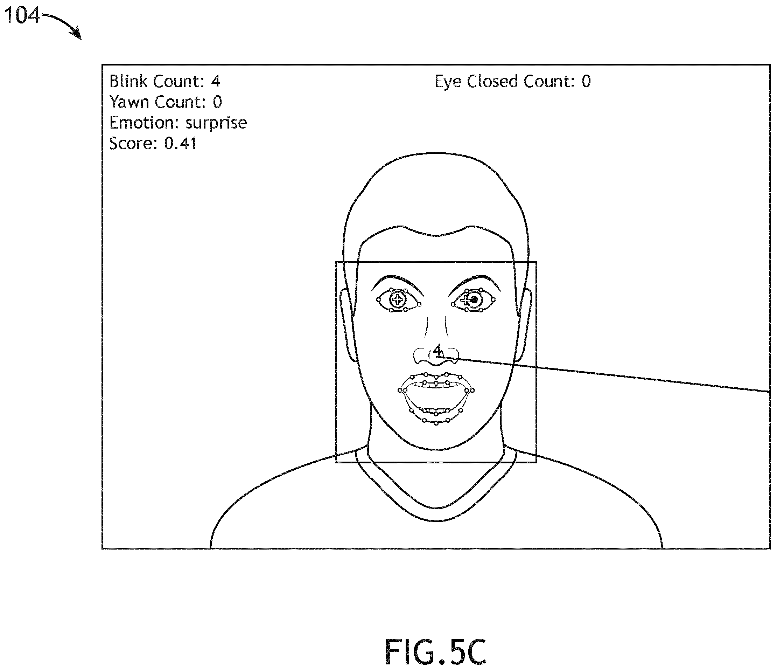

FIG. 4 illustrates a simplified block diagram flow chart depicting a method or process 400 for determine a fatigue scale value, in accordance with one or more embodiments of the present disclosure. FIGS. 5A-5C illustrate conceptual views of face tracking, in accordance with one or more embodiments of the present disclosure.

The system 100 may be further configured to detect one or more emotions of the pilot. For example, the one or more controllers 106 may be configured to detect at least one of anger, disgust, sadness, neutral, happy, surprise, or fear.

The system 100 may be configured to determine a fatigue scale value (based on Samn Prescili Fatigue Scale method) using the calculated sleep scale value (as previously discussed herein) and the detected emotions, where 1 indicates fully alert and 7 is fatigued (e.g., completely exhausted and tired). It is noted that the emotions that indicate high fatigue or entry into fatigue may include, but are not limited to, sad, anger, neutral, disgust, or the like. It is noted that the sleep scale may directly contribute to the fatigue computation. For example, the higher the sleep scale value the higher the chance of being fatigued. Further, the detection of negative emotions and low alert status may indicate / contribute to a higher fatigue scale value. In this regard, a lower fatigue scale value may be determined with a lower the sleep scale value, detection of positive emotions, and alert high gaze status.

In some embodiments, the system 100 may be configured to track a pilot's body posture. For example, the one or more pilot monitoring devices 102 may be configured to track the pilot's body posture during flight.

In some embodiments, the system 100 may be configured to capture audio from the cockpit. For example, the one or more pilot monitoring devices 102 may be configured to capture audio from the cockpit.

In some embodiments, the system 100 may be configured to receive flight status information from one or more on-board controllers of the aircraft. For example, the one or more controllers 106 may be configured to receive flight tracking and status information from one or more flight management systems on the aircraft.

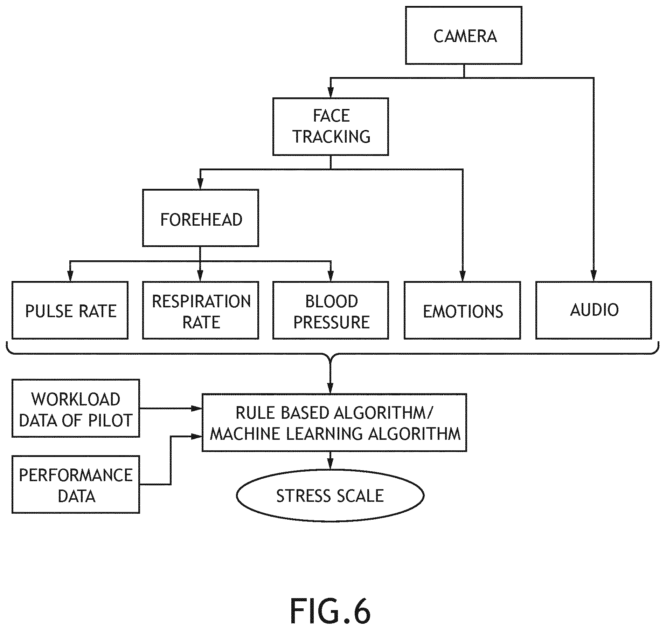

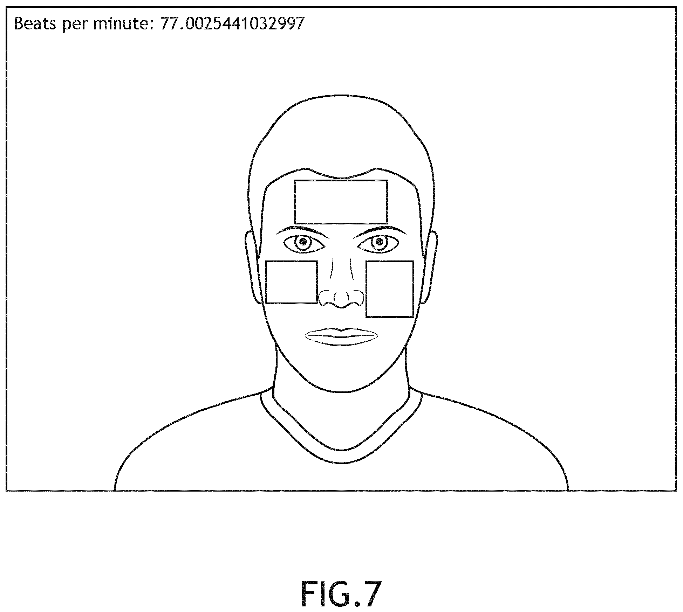

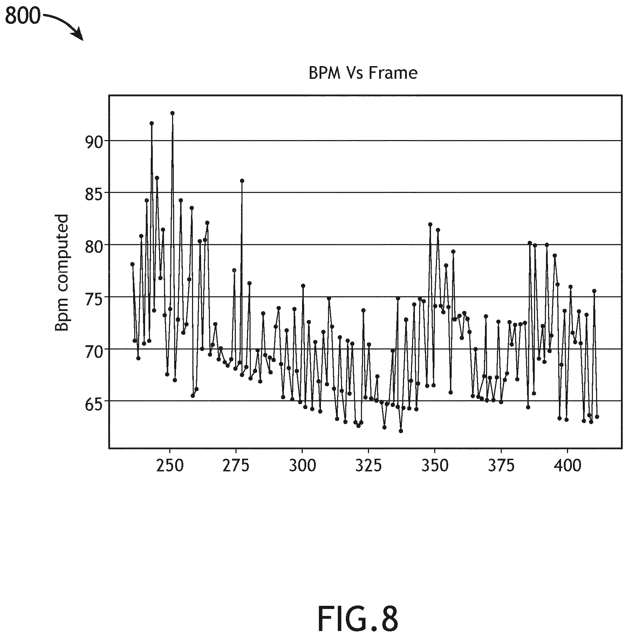

FIG. 6 illustrates a simplified block diagram flow chart depicting a method or process 600 for determine a stress scale value, in accordance with one or more embodiments of the present disclosure. FIG. 7 illustrates a conceptual view of face tracking, in accordance with one or more embodiments of the present disclosure. FIG. 8 illustrates a plot 800, in accordance with one or more embodiments of the present disclosure.

The system 100 may be configured to determine a stress scale value based on a skin color intensity value. For example, the one or more controllers 106 may be configured to determine a skin intensity value of at least one of the pilot's forehead or the pilot's cheeks based on the received images/video 106. Further, the one or more controllers 106 may be configured to determine at least one a pulse rate, a blood pressure, or a respiration rate based on the determined skin intensity value and the detected emotion. For example, the one or more controllers 106 may be configured to determine at least one a pulse rate, a blood pressure, or a respiration rate based on the determined skin color intensity value by deriving a power spectrum of the pixel values computed from the region of interest (e.g., forehead, cheeks and the like). In this regard, the derived power spectrum may be used with a band pass filter to capture the desired output. This may be accomplished by monitoring and measuring the regular reddening of the skin on the pilot's face caused by the pilot's heartbeat, either directly or by means of frequency analysis methods (e.g., like Temporal Fourier Transforms of camera pixel values in the areas where the highest reddening signal is likely to occur). It is noted that the aforementioned vitals may contribute directly to the Stress scale value. For example, if these vital values are found to be in the higher regions (e.g., higher than the normal value) over a period of time (e.g., a minute), then the Stress scale value may indicate a high chance of being stressed.

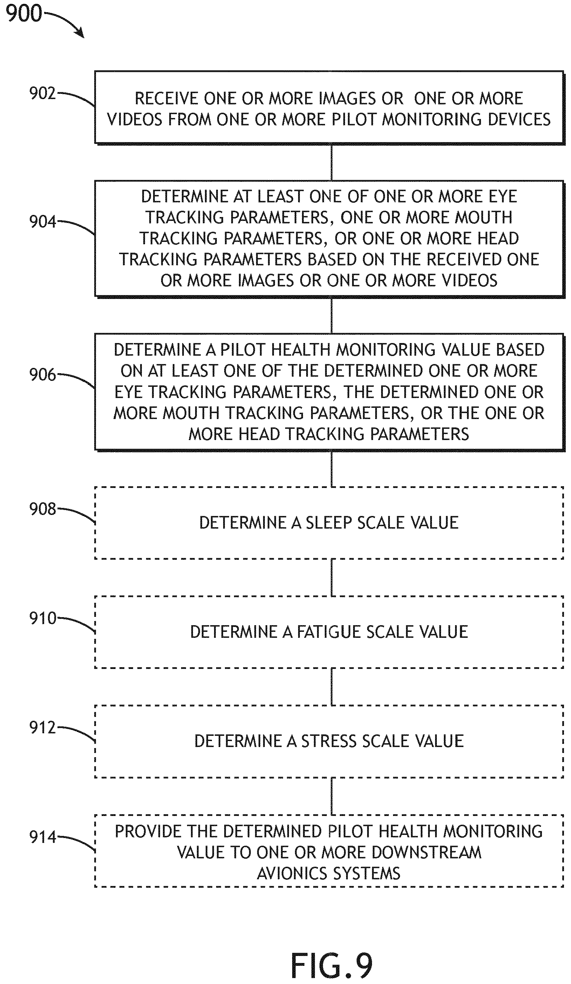

FIG. 9 illustrates a flow diagram depicting a method or process 900 of determining one or more pilot monitoring values, in accordance with one or more embodiments of the present disclosure.

In a step 902, at least one of one or more images or one or more videos may be received. For example, the one or more controllers 106 may be configured to receive the one or more images or the one or more videos, including the tracked facial features, from the one or more pilot monitoring devices.

In a step 904, one or more biometric parameters may be determined based on the received one or more images or videos. For example, the one or more controllers 106 may be configured to determine at least one of one or more eye tracking parameters, one or more mouth tracking parameters, or one or more head tracking parameters based on the receive one or more mages or one or more videos.

In a step 906, one or more pilot health monitoring values may be determined. For example, the one or more controllers 106 may be configured to determine one or more pilot health monitoring values based on at least one of the determined one or more eye tracking parameters, the determined one or more mouth tracking parameters, or the one or more head tracking parameters. In one instance, the one or more controllers 106 may be configured to determine one or more pilot health monitoring values based on at least one of the determined one or more eye tracking parameters, the determined one or more mouth tracking parameters, or the one or more head tracking parameters using a rule-based/machine learning algorithm stored in the memory of the one or more controllers. In another instance, the one or more controllers 106 may be configured to determine one or more pilot health monitoring values based on at least one of the determined one or more eye tracking parameters, the determined one or more mouth tracking parameters, or the one or more head tracking parameters using one or more predetermined thresholds of a database stored in the memory of the one or more controllers.

The one or more pilot health monitoring values includes at least one of a sleep scale value, a fatigue scale value, or a stress scale value.

In a step 908, a sleep scale value may be determined. For example, the one or more controllers 106 may be configured to determine a sleep scale value based on the determined one or more biometric parameters.

In a step 910, a fatigue scale value may be determined. For example, the one or more controllers 106 may be configured to determine a fatigue scale value based on the determined one or more biometric parameters and one or more detected emotions.

In a step 912, a stress scale value may be determined. For example, the one or more controllers 106 may be configured to determine a stress scale value by determining a skin intensity value of at least one of the pilot's forehead or the pilot's cheeks and then determining at least one a pulse rate, a blood pressure, or a respiration rate based on the determined skin intensity value along with an emotion detected. The one or more controllers 106 may be configured to determine at least one a pulse rate, a blood pressure, a respiration rate based on the determined skin intensity value by deriving a power spectrum, as described previously herein. It is noted that unlike existing monitoring systems which use invasive measurement devices, the system 100 may be configured to non-invasively detect east one a pulse rate, a blood pressure, or a respiration rate using vision-based pilot monitoring devices 102.

In an optional step 914, the determined one or more pilot monitoring values may be provided to one or more downstream avionics systems. For example, the one or more controllers 106 may be configured to provide the one or more determined pilot monitoring values to one or more downstream avionics controllers. In this regard, if the system determines that the pilot has poor alertness or poor health, the one or more controllers 106 may provide such status to one or more downstream avionics controllers (e.g., external air traffic control or airline monitoring centers). As such, the one or more downstream avionics controllers may adjust one or more function of the aircraft if it is determined that the pilot is incapacitated.

Although one or more embodiments of the present disclosure are directed to an a pilot health monitoring system for an aircraft, it is noted herein that the system and method may be directed for monitoring a health status for any type of vehicle operator environment.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system, the system comprising:
one or more pilot monitoring devices (102) configured to track one or more facial features of a pilot, the one or more tracked facial features including one of a pilot's forehead, or a pilot's cheek and, optionally, at least one of a pilot's eyes, a pilot's mouth, and a pilot's head posture, the one or more pilot monitoring devices configured to generate at least one of one or more images or one or more videos (104) of the tracked one or more facial features of the pilot; and
one or more controllers (106) communicatively coupled to the one or more imaging devices, the one or more controllers including one or more processors (108) configured to execute a set of program instructions stored in memory (110), the set of program instructions configured to cause the one or more processors to:
receive the at least one of the one or more images or the one or more videos from the one or more pilot monitoring devices;
determine at least one of one or more eye tracking parameters, one or more mouth tracking parameters, one or more head tracking parameters, or an emotion of the pilot based on the received one or more images or one or more videos;
determine a pilot health monitoring value based on at least one of the determined one or more eye tracking parameters, the determined one or more mouth tracking parameters, the one or more head tracking parameters, or the determined emotion of the pilot, and **characterized in that**;
the set of program instructions are further configured to cause the one or more processors to:
determine a colour skin intensity value of at least one of the pilot's forehead or the pilot's cheek; and
determine at least one of a pulse rate, a blood pressure, or a respiration rate based on the determined colour skin intensity value, and to derive a stress score therefrom.

2. The system of Claim 1, wherein the one or more pilot monitoring devices includes one or more cameras (122).

3. The system of Claim 2, wherein the one or more cameras includes one or more cockpit cameras.

4. The system of Claim 2, wherein the one or more cameras includes one or more head worn device cameras (142).

5. The system of any preceding Claim, wherein the one or more processors are configured to determine the pilot health monitoring value based on at least one of the determined one or more eye tracking parameters, the determined one or more mouth tracking parameters, the one or more head tracking parameters, or the determined emotion of the pilot using one of a rule-based algorithm or a machine learning model stored in the memory of the one or more controllers.

6. The system of any of Claims 1 to 4, wherein the one or more processors are configured to determine the pilot health monitoring value based on at least one of the determined one or more eye tracking parameters, the determined one or more mouth tracking parameters, or the one or more head tracking parameters using one or more predetermined thresholds stored in the memory of the one or more controllers.

7. The system of any preceding Claim, wherein the one or more eye tracking parameters include at least one of:
a blink frequency, a percentage of eye lid closure, an average eye closure, a blink type, an average eye closure speed, an interblink duration, an eye gaze state, or an eye gaze frequency.

8. The system of any preceding Claim, wherein the one or more mouth tracking parameters include a yawn frequency.

9. The system of any preceding Claim, wherein the one or more head tracking parameters include a head tilt angle.

10. The system of any preceding Claim, wherein the pilot health monitoring value includes a sleep scale score.

11. The system of any preceding Claim, wherein the pilot health monitoring value includes a fatigue scale score.

12. The system of any preceding claim, wherein the determination of at least one a pulse rate, a blood pressure, a respiration rate based on the determined skin colour intensity value further comprises:
deriving a power spectrum of one or more pixel values computed from at least one of the pilot's forehead or the pilot's cheeks.

13. A method, the method comprising:
receiving at least one of one or more images or one or more videos of one or more tracked facial features of a pilot from one or more pilot monitoring devices, the one or more tracked facial features including one of a pilot's forehead, or a pilot's cheek and, optionally, at least one of a pilot's eyes, a pilot's mouth, and a pilot's head posture;
determining at least one of one or more eye tracking parameters, one or more mouth tracking parameters, one or more head tracking parameters, or an emotion of the pilot based on the received one or more images or one or more videos;
determining a pilot health monitoring value based on at least one of the determined one or more eye tracking parameters, the determined one or more mouth tracking parameters, the one or more head tracking parameters, or the determined emotion of the pilot,
determining a colour skin intensity value of at least one of the pilot's forehead or the pilot's cheek; and
determining at least one of a pulse rate, a blood pressure, or a respiration rate based on the determined colour skin intensity value, and deriving a pilot's stress score therefrom.

## Patentansprüche

1. System, wobei das System Folgendes umfasst:
eine oder mehrere Pilotüberwachungsvorrichtungen (102), die dazu ausgelegt sind, ein oder mehrere Gesichtsmerkmale eines Piloten zu verfolgen, wobei das eine oder die mehreren verfolgten Gesichtsmerkmale eines von der Stirn des Piloten oder einer Wange des Piloten und optional mindestens eines von den Augen des Piloten, dem Mund des Piloten und der Kopfhaltung des Piloten beinhalten, wobei die eine oder die mehreren Pilotüberwachungsvorrichtungen dazu ausgelegt sind, mindestens eines von einem oder mehreren Bildern oder einem oder mehreren Videos (104) des einen oder der mehreren verfolgten Gesichtsmerkmale des Piloten zu erzeugen; und
eine oder mehrere Steuerungen (106), die kommunikativ mit der einen oder den mehreren Abbildungsvorrichtungen gekoppelt sind, wobei die eine oder die mehreren Steuerungen einen oder mehrere Prozessoren (108) beinhalten, die dazu ausgelegt sind, einen Satz von Programmanweisungen auszuführen, der in einem Speicher (110) gespeichert ist, wobei der Satz von Programmanweisungen dazu ausgelegt ist, den einen oder die mehreren Prozessoren zu Folgendem zu veranlassen:
Empfangen des mindestens einen von dem einen oder den mehreren Bildern oder dem einen oder den mehreren Videos von der einen oder den mehreren Pilotüberwachungsvorrichtungen;
Bestimmen mindestens eines von einem oder mehreren Augenverfolgungsparametern, einem oder mehreren Mundverfolgungsparametern, einem oder mehreren Kopfverfolgungsparametern oder einer Emotion des Piloten basierend auf dem einen oder den mehreren empfangenen Bildern oder dem einen oder den mehreren empfangenen Videos;
Bestimmen eines Pilot-Gesundheitsüberwachungswerts basierend auf mindestens einem von dem einen oder den mehreren bestimmten Augenverfolgungsparametern, dem einen oder den mehreren bestimmten Mundverfolgungsparametern, dem einen oder den mehreren Kopfverfolgungsparametern oder der bestimmten Emotion des Piloten, und **dadurch gekennzeichnet, dass**;
der Satz von Programmanweisungen dazu ausgelegt ist, den einen oder die mehreren Prozessoren zu Folgendem zu veranlassen:
Bestimmen eines Farbintensitätswert der Haut mindestens einer von der Stirn des Piloten oder der Wange des Piloten; und
Bestimmen mindestens eines von einer Pulsfrequenz, einem Blutdruck oder einer Atemfrequenz basierend auf dem bestimmten Farbintensitätswert der Haut und Ableiten eines Stress-Scores davon.

2. System nach Anspruch 1, wobei die eine oder mehrere Pilotüberwachungsvorrichtungen eine oder mehrere Kameras (122) beinhalten.

3. System nach Anspruch 2, wobei die eine oder die mehreren Kameras eine oder mehrere Cockpitkameras beinhalten.

4. System nach Anspruch 2, wobei die eine oder mehreren Kameras eine oder mehrere Kameras (142) einer am Kopf getragenen Vorrichtung beinhalten.

5. System nach einem der vorhergehenden Ansprüche, wobei der eine oder die mehreren Prozessoren dazu ausgelegt sind, den Pilot-Gesundheitsüberwachungswert basierend auf mindestens einem von dem einen oder den mehreren bestimmten Augenverfolgungsparametern, dem einen oder den mehreren bestimmten Mundverfolgungsparametern, dem einen oder den mehreren Kopfverfolgungsparametern oder der bestimmten Emotion des Piloten unter Verwendung eines von einem regelbasierten Algorithmus oder einem Modells für maschinelles Lernen zu bestimmen, der/das in dem Speicher der einen oder der mehreren Steuerungen gespeichert ist.

6. System nach einem der Ansprüche 1 bis 4, wobei der eine oder die mehreren Prozessoren dazu ausgelegt sind, den Pilot-Gesundheitsüberwachungswert basierend auf einem mindestens von dem einen oder den mehreren bestimmten Augenverfolgungsparametern, dem einen oder den mehreren bestimmten Mundverfolgungsparametern oder dem einen oder den mehreren Kopfverfolgungsparametern unter Verwendung eines oder mehrerer vorbestimmter Schwellenwerte zu bestimmen, die in dem Speicher der einen oder der mehreren Steuerungen gespeichert sind.

7. System nach einem der vorhergehenden Ansprüche, wobei der eine oder die mehreren Augenverfolgungsparameter mindestens eines von Folgenden beinhalten:
eine Blinzelfrequenz, einen Prozentsatz des Augenlidschlusses, einen durchschnittlichen Augenschluss, einen Blinzeltyp, eine durchschnittliche Augenschlussgeschwindigkeit, eine Dauer zwischen Blinzelvorgängen, einen Blickzustand der Augen oder eine Blickfrequenz der Augen.

8. System nach einem der vorhergehenden Ansprüche, wobei der eine oder die mehreren Mundverfolgungsparameter eine Gähnfrequenz beinhalten.

9. System nach einem der vorhergehenden Ansprüche, wobei der eine oder die mehreren Kopfverfolgungsparameter einen Kopfneigungswinkel beinhalten.

10. System nach einem der vorhergehenden Ansprüche, wobei der Pilot-Gesundheitsüberwachungswert einen Schlafskalen-Score beinhaltet.

11. System nach einem der vorhergehenden Ansprüche, wobei der Pilot-Gesundheitsüberwachungswert einen Ermüdungsskalen-Score beinhaltet.

12. System nach einem der vorhergehenden Ansprüche, wobei die Bestimmung mindestens eines von einer Pulsfrequenz, einem Blutdruck, einer Atemfrequenz basierend auf dem bestimmten Farbintensitätswert der Haut ferner Folgendes umfasst:
Ableiten eines Leistungsspektrums eines oder mehrerer Pixelwerte, die aus mindestens einem von der Stirn des Piloten oder den Wangen des Piloten berechnet wurden.

13. Verfahren, wobei das Verfahren Folgendes umfasst:
Empfangen mindestens eines von einem oder mehreren Bildern oder einem oder mehreren Videos eines oder mehrerer verfolgter Gesichtsmerkmale eines Piloten von einer oder mehreren Pilotenüberwachungsvorrichtungen, wobei das eine oder die mehreren verfolgten Gesichtsmerkmale eines von der Stirn des Piloten oder einer Wange des Piloten und optional mindestens eines von den Augen des Piloten, dem Mund des Piloten und der Kopfhaltung des Piloten beinhalten;
Bestimmen mindestens eines von einem oder mehreren Augenverfolgungsparametern, einem oder mehreren Mundverfolgungsparametern, einem oder mehreren Kopfverfolgungsparametern oder einer Emotion des Piloten basierend auf dem einen oder den mehreren empfangenen Bildern oder dem einen oder den mehreren empfangenen Videos;
Bestimmen eines Pilot-Gesundheitsüberwachungswerts basierend auf mindestens einem von dem einen oder den mehreren bestimmten Augenverfolgungsparametern, dem einen oder den mehreren bestimmten Mundverfolgungsparametern, dem einen oder den mehreren Kopfverfolgungsparametern oder der bestimmten Emotion des Piloten,
Bestimmen eines Farbintensitätswert der Haut mindestens einer von der Stirn des Piloten oder der Wange des Piloten; und
Bestimmen mindestens eines von einer Pulsfrequenz, einem Blutdruck oder einer Atemfrequenz basierend auf dem bestimmten Farbintensitätswert der Haut und Ableiten eines Stress-Scores des Piloten davon.

## Revendications

1. Système, le système comprenant :
un ou plusieurs dispositifs de surveillance de pilote (102) configurés pour suivre une ou plusieurs caractéristiques faciales d'un pilote, les une ou plusieurs caractéristiques faciales suivies comportant l'un d'un front du pilote ou d'une joue du pilote et, éventuellement, au moins l'un des yeux du pilote, de la bouche du pilote et de la posture de la tête du pilote, les un ou plusieurs dispositifs de surveillance de pilote étant configurés pour générer au moins l'une des une ou plusieurs images ou d'une ou plusieurs vidéos (104) des une ou plusieurs caractéristiques faciales suivies du pilote ; et
un ou plusieurs dispositifs de commande (106) couplés de manière communicative aux un ou plusieurs dispositifs d'imagerie, les un ou plusieurs dispositifs de commande comportant un ou plusieurs processeurs (108) configurés pour exécuter un ensemble d'instructions de programme stockées dans la mémoire (110), l'ensemble d'instructions de programme étant configuré pour amener les un ou plusieurs processeurs à :
recevoir l'au moins l'une des une ou plusieurs images ou des une ou plusieurs vidéos en provenance des un ou plusieurs dispositifs de surveillance de pilote ;
déterminer au moins l'un d'un ou plusieurs paramètres de suivi oculaire, d'un ou plusieurs paramètres de suivi de la bouche, d'un ou plusieurs paramètres de suivi de la tête ou d'une émotion du pilote sur la base des une ou plusieurs images ou d'une ou plusieurs vidéos reçues ;
déterminer une valeur de surveillance de la santé du pilote sur la base d'au moins l'un des un ou plusieurs paramètres de suivi oculaire déterminés, des un ou plusieurs paramètres de suivi de la bouche déterminés, des un ou plusieurs paramètres de suivi de la tête ou de l'émotion du pilote déterminée, et **caractérisé en ce que** ;
l'ensemble d'instructions de programme sont également configurées pour amener les un ou plusieurs processeurs à :
déterminer une valeur d'intensité de couleur de peau d'au moins l'un du front du pilote ou de la joue du pilote ; et
déterminer au moins l'un d'un rythme cardiaque, d'une pression artérielle ou d'un rythme respiratoire sur la base de la valeur d'intensité de couleur de peau déterminée, et en déduire un score de stress.

2. Système selon la revendication 1, dans lequel les un ou plusieurs dispositifs de surveillance de pilote comportent une ou plusieurs caméras (122).

3. Système selon la revendication 2, dans lequel les un ou plusieurs caméras comportent une ou plusieurs caméras de cockpit.

4. Système selon la revendication 2, dans lequel les un ou plusieurs caméras comportent une ou plusieurs caméras de dispositif porté sur la tête (142).

5. Système selon une quelconque revendication précédente, dans lequel les un ou plusieurs processeurs sont configurés pour déterminer la valeur de surveillance de la santé du pilote sur la base d'au moins l'un des un ou plusieurs paramètres de suivi oculaire déterminés, des un ou plusieurs paramètres de suivi de la bouche déterminés, des un ou plusieurs paramètres de suivi de la tête, ou de l'émotion du pilote déterminée à l'aide de l'un d'un algorithme basé sur des règles ou d'un modèle d'apprentissage automatique stocké dans la mémoire des un ou plusieurs dispositifs de commande.

6. Système selon l'une quelconque des revendications 1 à 4, dans lequel les un ou plusieurs processeurs sont configurés pour déterminer la valeur de surveillance de la santé du pilote sur la base d'au moins l'un des un ou plusieurs paramètres de suivi oculaire déterminés, des un ou plusieurs paramètres de suivi de la bouche déterminés ou des un ou plusieurs paramètres de suivi de la tête à l'aide d'un ou plusieurs seuils prédéterminés stockés dans la mémoire des un ou plusieurs dispositifs de commande.

7. Système selon une quelconque revendication précédente, dans lequel les un ou plusieurs paramètres de suivi oculaire comportent au moins l'un des éléments suivants :
une fréquence de clignement, un pourcentage de fermeture des paupières, une fermeture moyenne des yeux, un type de clignement, une vitesse moyenne de fermeture des yeux, une durée entre les clignements, un état du regard ou une fréquence du regard.

8. Système selon une quelconque revendication précédente, dans lequel les un ou plusieurs paramètres de suivi de la bouche comportent une fréquence de bâillement.

9. Système selon une quelconque revendication précédente, dans lequel les un ou plusieurs paramètres de suivi de la tête comportent un angle d'inclinaison de la tête.

10. Système selon une quelconque revendication précédente, dans lequel la valeur de surveillance de la santé du pilote comporte un score d'échelle de sommeil.

11. Système selon une quelconque revendication précédente, dans lequel la valeur de surveillance de la santé du pilote comporte un score d'échelle de fatigue.

12. Système selon une quelconque revendication précédente, dans lequel la détermination d'au moins l'une d'une fréquence cardiaque, d'une pression artérielle, d'une fréquence respiratoire sur la base de la valeur d'intensité de couleur de peau déterminée comprend également :
la dérivation d'un spectre de puissance d'une ou plusieurs valeurs de pixels calculées à partir d'au moins l'un du front du pilote ou des joues du pilote.

13. Procédé, le procédé comprenant :
la réception d'au moins l'une des une ou plusieurs images ou d'une ou plusieurs vidéos d'une ou plusieurs caractéristiques faciales suivies d'un pilote en provenance d'un ou plusieurs dispositifs de surveillance de pilote, les une ou plusieurs caractéristiques faciales suivies comportant l'un d'un front du pilote, ou d'une joue du pilote et, éventuellement, au moins l'un des yeux du pilote, d'une bouche du pilote et d'une posture de la tête du pilote ;
la détermination d'au moins l'un d'un ou plusieurs paramètres de suivi oculaire, d'un ou plusieurs paramètres de suivi de la bouche, d'un ou plusieurs paramètres de suivi de la tête ou d'une émotion du pilote sur la base des une ou plusieurs images ou d'une ou plusieurs vidéos reçues ;
la détermination d'une valeur de surveillance de la santé du pilote sur la base d'au moins l'un des un ou plusieurs paramètres de suivi oculaire déterminés, des un ou plusieurs paramètres de suivi de la bouche déterminés, des un ou plusieurs paramètres de suivi de la tête ou de l'émotion du pilote déterminée,
la détermination d'une valeur d'intensité de couleur de peau d'au moins l'un du front du pilote ou de la joue du pilote ; et
la détermination d'au moins l'un d'un rythme cardiaque, d'une pression artérielle ou d'un rythme respiratoire sur la base de la valeur d'intensité de couleur de peau déterminée, et la déduction d'un score de stress.
